Europäisches Patentamt

European Patent Office

Office européen des brevets

(19)

(11) Veröffentlichungsnummer: **0 324 444**

**A2**

(12) ## EUROPÄISCHE PATENTANMELDUNG

(21) Anmeldenummer: **89100367.5**

(22) Anmeldetag: **11.01.89**

(51) Int. Cl.⁴ **B27G 19/10**

(30) Priorität: **15.01.88 DE 3800935**

(43) Veröffentlichungstag der Anmeldung:
**19.07.89 Patentblatt 89/29**

(84) Benannte Vertragsstaaten:
**AT CH DE FR GB IT LI NL**

(71) Anmelder: **Karl M. Reich, Maschinenfabrik GmbH**
**Kisslingstrasse 1 Postfach 1740**
**D-7440 Nürtingen(DE)**

(72) Erfinder: **Raichle, Dieter**
**Reuderner Strasse 109**
**D-7440 Nürtingen(DE)**

(54) **Ritzvorrichtung.**

(57) Zur Erzielung eines einwandfreien und sauberen Sägeschnittes bei beschichteten Werkstücken (3) aus Holz oder dgl. ist ein mit dem Sägeblatt (28) fluchtendes Ritzelement (6) vorgesehen, das senkrecht zur Oberfläche des Werkstücks (3) einstellbar auf einem Rahmen (11) gelagert ist. Das Ritzelement (6) ist als antreibbares Kreissägeblatt ausgebildet und kann zusammen mit dem Rahmen (11) als integriertes Bauteil einer Handkreissäge (10) oder als selbstständige Ritzeinheit (1) verwendet werden, die sich an eine Handkreissäge (24) anstecken läßt.

EP 0 324 444 A2

FIG. 3

**Ritzvorrichtung**

Die vorliegende Erfindung betrifft eine Ritzvorrichtung zum Vorritzen insbesondere von beschichteten Werkstücken aus Holz oder dgl. gemäß Oberbegriff von Anspruch 1.

Beim Durchsägen von beschichteten Werkstücken kann die Deckschicht splittern, so daß kein einwandfreier Sägeschnitt zu erzielen ist. Aus diesem Grund ist es bekannt, z.B. bei Handkreissägen auf der Grundplatte ein mit dem Sägeblatt fluchtendes Ritzmesser mit scharfer Schneide anzuordnen, das vom Bedienungsmann mit der Säge in die Oberfläche des Werkstücks eingedrückt wird und so eine Kerbe erzeugt, die ein Aussplittern der Deckschicht durch das nachfolgende Sägeblatt verhindern soll.

Dabei ergibt sich der Nachteil, daß das Ritzmesser vom Bedienungsmann stark angedrückt werden muß, was diesen in der Handhabung der Säge beeinträchtigt. Die Deckschicht des Werkstücks wird von der Schneide des Ritzmessers nach außen verdrängt und kann beim Sägen splittern. Ein einwandfreier Sägeschnitt ist also bei dieser bekannten Ritzvorrichtung nicht erzielbar.

Aufgabe der vorliegenden Erfindung ist daher die Schaffung einer Ritzvorrichtung der eingangs genannten Art, die bei bequemer Handhabung und sicherer Führung einen ausrißfreien Sägeschnitt ermöglicht.

Diese Aufgabe wird erfindungsgemäß gelöst durch die Merkmale im Kennzeichen des Anspruchs 1.

Durch die Verwendung eines von einem Motor antreibbaren Ritzelement, vorteilhafterweise in Form eines Kreissägeblattes, ist eine sichere Führung der Ritzvorrichtung bzw. der Handkreissäge und damit ein einwandfreier undsauberer Sägeschnitt in einem Arbeitsgang gewährleistet.

Neben einer erfindungsgemäßen Verwendung der Ritzvorrichtung als integriertes Bauteil einer Handkreissäge kann die Ritzvorrichtung, wie in den Unteransprüchen gekennzeichnet, auch als selbständige Einheit verwendet werden.

Diese Ritzeinheit läßt sich erfindungsgemäß an eine Handkreissäge ohne Ritzvorrichtung anstecken, z. B. in die Aufnahmeschlitze des Längsanschlags, so daß es möglich ist, bereits beim Kunden befindliche Handkreissägen mit einer zusätzlichen Ritzvorrichtung auszurüsten.

Es besteht erfindungsgemäß auch die möglichkeit, die Ritzvorrichtung mit einem Führungsschuh zu verbinden, der in bekannter Weise entlang einer auf das Werkstück auflegbaren Führungsschiene verschiebbar ist. Damit kann die Ritzvorrichtung z.B. auch in Verbindung mit einer ebenfalls auf der Führungsschiene geführten Sticksäge verwendet werden und es ist möglich, gerade und ausrißfreie Sägeschnitte zu erzielen.

Der Antriebsmotor für das Ritzelement kann als 12 V-Motor durch einen Akkumulator bzw. über einen Transformator mit Gleichrichter speisbar sein. Bei der integrierten Ausführung der Ritzvorrichtung mit einer Handkreissäge wird zweckmäßigerweise ein 220 V-Motor verwendet.

Im folgenden sind Ausführungsbeispiele der Erfindung unter Bezugnahme auf die Zeichnungen näher beschrieben.

Es zeigen:

Fig. 1 Ritzvorrichtung von oben

Fig. 2 Ritzvorrichtung von der Seite

Fig. 3 Handkreissäge mit integrierter Ritzvorrichtung, von oben

Fig. 4 Handkreissäge mit angesteckter Ritzvorrichtung

Fig. 5 Ritzvorrichtung mit Führungsschuh, von vorne

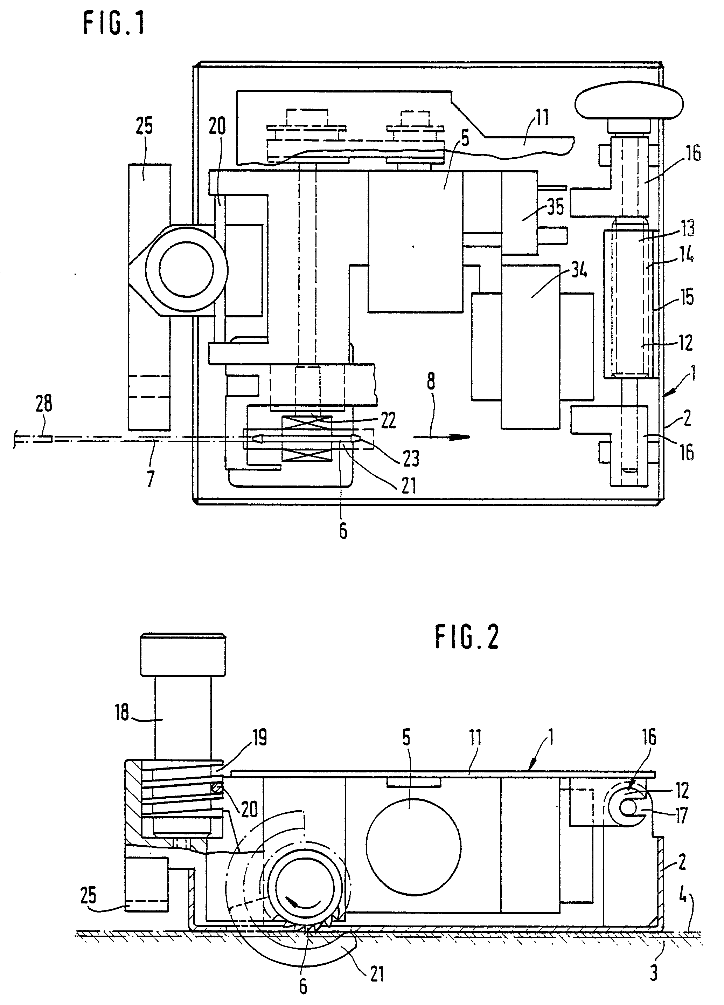

Die Fig. 1 und 2 zeigen die Ritzvorrichtung 1 als selbständige Einheit. Sie ist mit ihrem Gehäuse 2 auf ein Werkstück 3 aufsetzbar, wobei dieses Werkstück eine Deckschicht 4, z.B. aus Kunststoff, aufweist. In diese Deckschicht 4 soll mittels eines von einem Elektromotor 5 antreibbaren Ritzelement 6 in Form eines Sägeblatts die gewünschte Kerbe 7 erzeugt werden, wozu die Ritzvorrichtung 1 in Richtung von Pfeil 8 verschoben wird.

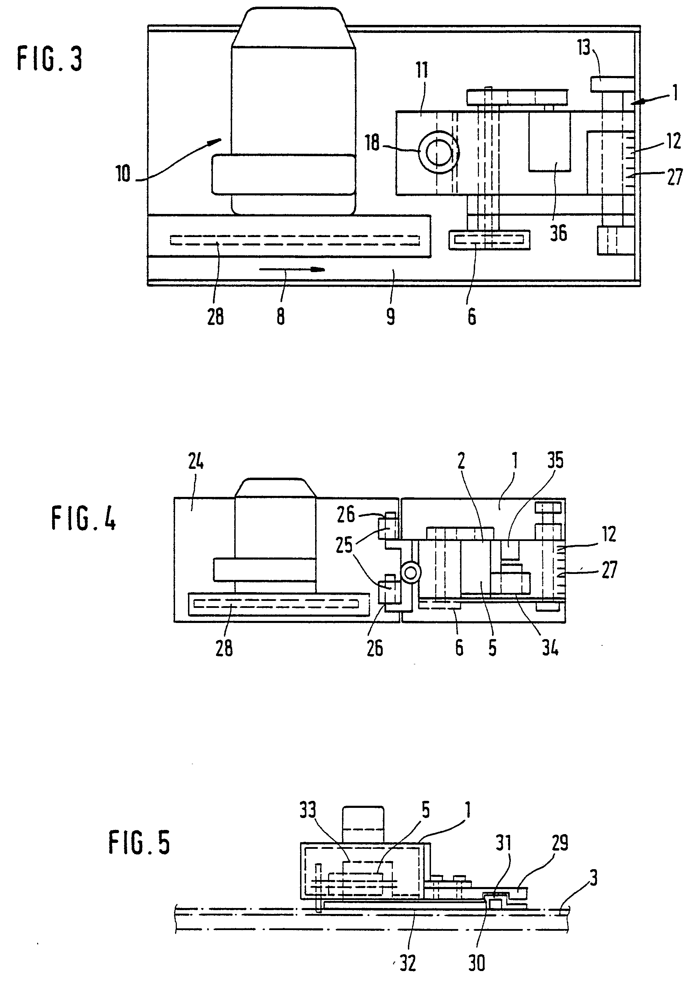

Wie Fig. 3 zeigt, kann die Ritzvorrichtung 1 auch fest mit der Grundplatte 9 einer Handkreissäge 10 verbunden sein.

Der Elektromotor 5 und das Ritzelement 6 sind in einem Rahmen 11 angeordnet, der mit einem Schwenklager 12 am Gehäuse 2 schwenkbar gelagert ist.

Die Schwenkachse 13 des Schwenklagers 12 greift mit einem Gewinde 14 in ein Gegengewinde einer Lagerkonsole 15 ein und ist an ihren beiden Enden in Lagerhülsen 16 des Rahmens 11 gelagert. Durch Verdrehen von Schwenkachse 13 läßt sich somit der Rahmen 11 und damit das Ritzelement 6 quer zur Vorschubrichtung 8 verschieben und auf das nachfolgende Sägeblatt 28 einstellen.

Wie besonders Fig. 2 zeigt, sind die Lagerhülsen 16 mit seitlichen Schlitzen 17 versehen, mit denen sie in die Zapfen der Schwenkachse 13 einführbar sind. Damit ist es möglich, nach dem Hochschwenken von Rahmen 11 diesen vollständig vom Gehäuse 2 zu trennen.

Das Gehäuse 2 weist an seinem dem Schwenklager 12 entgegengesetzten Ende eine Verstellspindel 18 auf, in deren Flachgewinde 19 ein mit dem Rahmen 11 verbundenes Kupplungselement 20 in Form eines zylindrischen Querstabes eingreift. Beim Verdrehen der Verstellspindel 18 wird somit der Rahmen 11 über das Kupplungselement 20 mitgenommen, so daß das Ritzelement 6 auf die gewünschte Ritztiefe genau einstellbar ist.

Zur Abdeckung von Ritzelement 6 dient eine Pendelschutzhaube 21, die um die Achse 22 von Ritzelement 6 schwenkbar gelagert ist und beim Aufsetzen der Ritzvorrichtung 1 auf das Werkstück 3 in die Freigabestellung verschoben wird.

Wie Fig. 1 zeigt, weist das Ritzelement 6 in Form eines Kreissägeblatts sich radial nach außen konisch verjüngende Zähne 23 auf. Damit ist es möglich, durch Verstellung der Eintauchtiefe des Ritzelements 6 eine mehr oder weniger breite Kerbe 7 zu erzeugen, die somit der Schnittbreite des nachfolgenden Sägeblatts angepaßt werden kann.

Die Fig. 4 zeigt ein weiteres Ausführungsbeispiel der Erfindung, wobei die Ritzvorrichtung 1 als selbständige Einheit ausgebildet ist, die mit einer Handkreissäge 24 ohne Ritzvorrichtung verbindbar ist. Dazu weist das Gehäuse 2 der Ritzvorrichtung 1 Halteelemente 25 auf (siehe auch Fig. 1 und 2), die in Aufnahmeschlitze 26 der Handkreissäge 24 einsteckbar sind. Diese Aufnahmeschlitze sind bereits vorhanden und dienen ohne Ritzvorrichtung zur Aufnahme eines nicht dargestellten Längsanschlags.

Wie die Fig. 3 und 4 zeigen, ist das Schwenklager 12 mit einer Skala 27 zur Anzeige der Querverschiebung des Ritzelements 6 versehen. Diese Skala 27 ist vorteilhafterweise anwendbar, wenn das Sägeblatt 28 der Handkreissäge 10 bzw. 24 für einen Gehrungsschnitt schräggestellt wird. Damit verändert sich die Eintauchlinie des Sägeblatts 28 und das Ritzelement 6 kann je nach Winkelstellung dieses Sägeblatts 28 genau auf die geltende Eintauchlinie eingestellt werden.

Die Fig. 5 zeigt ein weiteres Anwendungsbeispiel der Erfindung, wobei die Ritzvorrichtung 1 mit einem Führungsschuh 29 verbunden ist. Dieser Führungsschuh 29 weist in bekannter Weise eine Führungsrinne 30 auf, in die eine Führungsrippe 31 einer Führungsschiene 32 eingreift, die auf das Werkstück 3 auflegbar ist. Damit ist es möglich, mit der Ritzvorrichtung 1 einwandfrei gerade Kerben zu erzeugen, wobei diese Anordnung auch in Verbindung mit einer nicht dargestellten Stichsäge verwendbar ist. Der Elektromotor 5 ist in diesem Fall durch einen Akkumulator 33 speisbar.

Bei Verwendung der Ritzvorrichtung 1 als Aufsteckausführung zusammen mit einer Handkreissäge 24 (Fig. 4) kann zur Speisung des Elektromotors 5 ein Transformator 34 mit Gleichrichter 35 vorsehbar sein.

Bei der integrierten Ausführung der Ritzvorrichtung 1 gemäß Fig. 3 kann zum Antrieb des Ritzelements 6 ein 220 V-Motor 36 verwendet werden.

Es ist auch in diesem Fall möglich, einen 12 V-Motor 36 zu verwenden, der über einen Transformator 34 und Gleichrichter 35 mit dem Elektromotor der Handkreissäge 10 elektrisch verbunden ist.

## Ansprüche

1) Ritzvorrichtung zum Vorritzen insbesondere von beschichteten Werkstücken aus Holz oder dgl. mit einem quer zur Vorschubrichtung einstellbaren Ritzelement, wobei der vollständige Sägeschnitt von einer mit dem Ritzelement fluchtenden, motorbetriebenen Säge erfolgt, **dadurch gekennzeichnet,** daß das von einem Motor (5, 36) antreibbare Ritzelement (6) senkrecht zur Oberfläche des Werkstücks (3) einstellbar auf einem Rahmen (11) gelagert ist.

2) Ritzvorrichtung nach Anspruch 1, **dadurch gekennzeichnet,** daß die Ritzvorrichtung (1) auf der Grundplatte (9) einer Handkreissäge (10) angeordnet ist.

3) Ritzvorrichtung nach Anspruch 1 oder 2, **dadurch gekennzeichnet,** daß der Rahmen (11) mit einem Schwenklager (12) versehen ist, dessen Schwenkachse (13) quer zur Vorschubrichtung (8) einstellbar an einem Gehäuse (2) gelagert ist.

4) Ritzvorrichtung nach Anspruch 3, **dadurch gekennzeichnet,** daß die Lagerhülsen (16) des Schwenklagers (12) nach einer Seite Schlitze (17) aufweisen, durch die die Lagerhülsen (16) in die Schwenkachse (13) einschiebbar sind.

5) Ritzvorrichtung nach Anspruch 3 oder 4, **dadurch gekennzeichnet,** daß der Rahmen (11) an seinem dem Schwenklager (12) entgegengesetzten Ende mit einem Kupplungselement (20) versehen ist, das in das Gewinde (19) einer Verstellspindel (18) eingreift.

6) Ritzvorrichtung nach einem der Ansprüche 1 bis 5, **dadurch gekennzeichnet,** daß am Rahmen (11) eine das Ritzelement (6) abdeckende Pendelschutzhaube (21) schwenkbar gelagert ist.

7) Ritzvorrichtung nach einem der Ansprüche 1 bis 6, **dadurch gekennzeichnet,** daß das als Ritzsägeblatt ausgebildete Ritzelement (6) Sägezähne (23) aufweist, die sich radial nach außen konisch verjüngen.

8) Ritzvorrichtung nach einem der Ansprüche 1 oder 3 bis 7, **dadurch gekennzeichnet,** daß die Ritzvorrichtung (1) als selbständige Ritzeinheit ausgebildet ist, deren Elektromotor (5) von einem Akkumulator (33) antreibbar ist.

9) Ritzvorrichtung nach Anspruch 8, **dadurch gekennzeichnet,** daß das Gehäuse (2) der Ritzvorrichtung (1) Halteelemente (25) aufweist, die in Aufnahmeschlitze (26) einer Handkreissäge (24) einführbar sind und daß das Ritzorgan (6) wahlweise über einen Akkumulator (33) oder einen über einen Transformator (34) mit Gleichrichter (35) gespeisten Gleichstrommotor (5) antreibbar ist.

10) Ritzvorrichtung nach einem der Ansprüche 2 bis 9, **dadurch gekennzeichnet,** daß das Schwenklager (12) mit einer Skala (27) zur Anzeige der Querverschiebung des Ritzelements (6) versehen ist.

11. Ritzvorrichtung nach Anspruch 8 , **dadurch gekennzeichnet,** daß die Ritzvorrichtung (1) mit einem Führungsschuh (29) verbindbar ist, dessen Führungsrippe (30) mit der Führungsrippe (31) einer Führungsschiene (32) zusammenwirkt.

12) Ritzvorrichtung nach einem der Ansprüche 2 bis 7. **dadurch gekennzeichnet,** daß das Ritzorgan (6) über einen Gleichstrommotor (36) antreibbar ist. der über einen Transformator (34) und Gleichrichter (35) mit dem Elektromotor eines Elektrowerkzeugs (10) verbunden ist.

# FIG.1

# FIG.2

FIG.3

FIG.4

FIG.5